(19) Europäisches Patentamt
European Patent Office
Office européen des brevets

(11) **EP 3 525 170 B1**

(12) **EUROPEAN PATENT SPECIFICATION**

(45) Date of publication and mention
of the grant of the patent:
**11.03.2020 Bulletin 2020/11**

(51) Int Cl.:
***G06T 7/70*** *(2017.01)*

(21) Application number: **19157018.3**

(22) Date of filing: **13.02.2019**

(54) **IMAGING-BASED DETECTION OF TARGETS UNIDENTIFIABLE WITH RESPECT TO THE BACKGROUND**

BILDGEBUNGSBASIERTE ERKENNUNG VON ZIELEN, DIE IN BEZUG AUF DEN HINTERGRUND NICHT IDENTIFIZIERBAR SIND.

DÉTECTION PAR IMAGERIE DE CIBLES NON IDENTIFIABLES PAR RAPPORT À L'ARRIÈRE-PLAN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.02.2018 IT 201800002654**

(43) Date of publication of application:
**14.08.2019 Bulletin 2019/33**

(73) Proprietor: **Thales Alenia Space Italia S.p.A. Con Unico Socio**
**00131 Roma (IT)**

(72) Inventor: **CESARE, Stefano**
**10146 Torino (IT)**

(74) Representative: **Bergadano, Mirko et al**
**Studio Torta S.p.A.**
**Via Viotti, 9**
**10121 Torino (IT)**

(56) References cited:
**WO-A1-2014/078811     WO-A2-2007/095282**
**US-A1- 2009 324 015**

**Description**

**Cross-Reference to Related Patent Applications**

This patent application claims priority from Italian patent application no. 102018000002654 filed on February 13, 2018.

**Technical Field of the Invention**

The present invention relates in general to imaging-based target detection, in particular targets not directly identifiable with respect to the background, and in particular to synchronization of operation of imaging sensors with respect to pulsed operation of electromagnetic radiation emitting sources associated with the targets to be detected.

The present invention finds advantageous, though not exclusive, application in the aerospace field to detect targets in the form of target flying vehicles, such a spacecrafts, for example satellites, or aircrafts, by detecting flying vehicles, to which the following description shall refer to without any loss of generality.

Nonetheless, the present invention could also find application in the terrestrial field to detect targets in the form of installations, equipment, or objects.

Furthermore, the present invention finds advantageous implementation by exploiting electromagnetic radiation emitting sources capable of emitting light radiations in the range of wavelengths where the imaging sensors are more sensitive, and which can belong indifferently to the spectrum visible to the human eye, or to the spectrum invisible to the human eye, such as infrared, ultraviolet or X-ray spectrum, to which the following description shall make reference without any loss of generality.

**State of the Art**

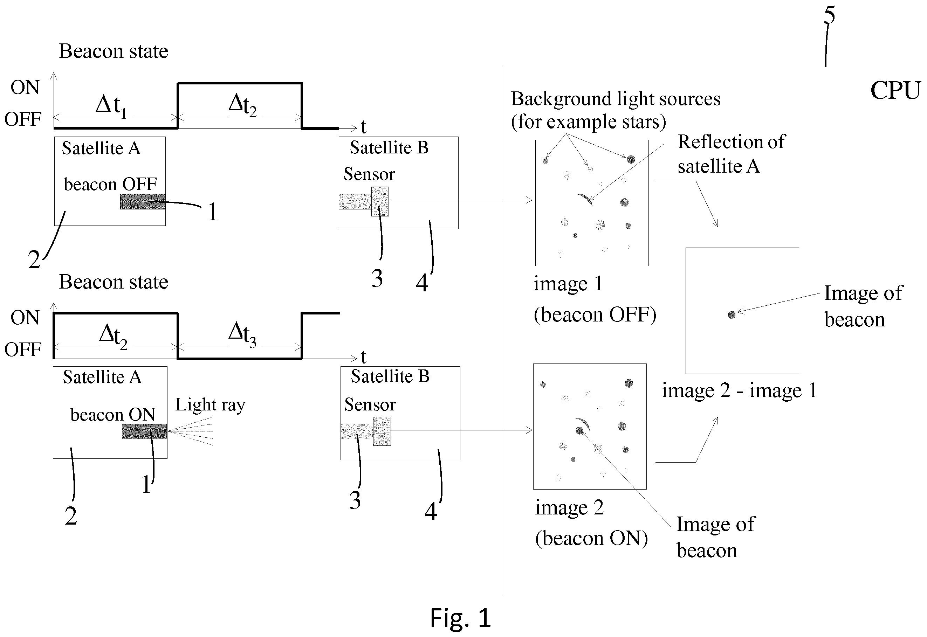

As is known, in the aerospace field, one of the aspects that covers a role of paramount importance is represented by the determination of the attitude and reciprocal positions of satellites forming part of a satellite constellation in which the satellites must assume a certain flight formation. Given the enormous distances that can exist between the satellites, determination of the attitude and reciprocal positions of the satellites is typically based on an imaging-based detection technology, a principle block diagram of which is shown by way of example in Figure 1.

Imaging-based detection technology basically envisages providing a light source **1** on a target satellite **2** and a light-sensitive imaging sensor **3** on a detector satellite **4.** The light source **1** may, for example, be a laser source, also known as beacon, and is capable of emitting light radiation in the range of wavelengths where the imaging sensor **3** is most sensitive, typically around 600 nanometres for light sensor of common digital cameras, while the imaging sensor **3** may, for example, be a CCD (Charge-Coupled Device) camera, a CMOS (Complementary Metal-Oxide-Semiconductor) camera, also known as APS (Active Pixel Sensor) camera, or even a thermographic camera.

Imaging-based detection technology further envisages appropriately synchronizing the image capture with respect to the pulsed light emission, i.e., the operation of the imaging sensor **3** with respect to the pulsed operation of the light source **1**, so as to cause the imaging sensor **3** to capture at least a pair of digital images of a portion of space where the possible presence of the target satellite **2** is wished to be detected. One of the digital images is captured when the imaging sensor **3** is impinged by a light ray emitted by the light source **1**, so resulting in a luminous spot representative of the light ray emitted by the light source **1** being consequently shown in the digital image, and the other digital image is captured when the imaging sensor **3** is not impinged by any light ray emitted by the light source **1**, so resulting in no luminous spot representative of the light ray emitted by the light source **1** being consequently shown in the digital image.

The captured digital images are then sent to an electronic processing unit **5**, where they are processed to identify the light source **1** shown in one of the two digital images. In particular, the electronic processing unit **5** is programmed to receive the two digital images captured by the imaging sensor **3** and compute a digital difference image as the difference between the two captured digital images.

The difference operation removes the background in the two digital images, which is typically formed by luminous spots representative of light rays emitted by background light sources, such as stars, and/or deriving from straylight emitted, for example, by the target satellite **2**, so resulting in the digital difference image showing only, at least in principle, the luminous spot representative of light ray emitted by the light source **1** on the target satellite **2** and that has impinged on the imaging sensor **3**, and based on which the electronic processing unit **5** may then detect and determine the coordinates of the target satellite **2.**

Capturing a sequence of pairs of digital images and processing the captured pairs of digital images in the above-described manner, it is also possible to determine the trajectory of the target satellite **2** for tracking and formation-keeping purposes.

In order for the removal of the background in the two digital images to be complete and, resultingly, for the luminous spot representative of the light ray emitted by the light source **1** to stand out in the digital difference image, it is required that the luminous intensity of the background in the two digital images from which the difference is computed be the same. In order to cause that to happen, it is therefore required that the capture period of a digital image, also known as exposure time of the imaging sensor **3**, i.e., the period of time for which the imaging sensor **3** remains exposed to light to capture a digital image, be identical for both digital images.

In imaging-based detection technology, the synchronization of the digital image capture with respect to the pulsed light emission covers a paramount role for identifying the target satellite. An erroneous or imprecise synchronization could in fact result in the capture of pairs of digital images in both of which a luminous spot is shown with the same luminous intensity representative of the light emitted by the light source **1**, so resulting in the luminous spot representative of the light ray emitted by the light source **1** being totally cancelled from the difference digital image, and, resultingly, in the target satellite **2** being failed to be identified.

Solutions are known in which the of digital image capture and the pulsed light emission are synchronised based on a common synchronization signal shared by the target and detector satellites **2** and **4** through inter-satellite relaying communications, such as a radio frequency or optical link, or is locally computed by the target and detector satellites **2** and **4** based on radio Signals in Space (SIS) transmitted by a GNSS (Global Navigation Satellite System) satellite constellation, as described, for example, in EP 1 989 681.

US 2009/324015 A1 instead discloses an emitter tracking system in which the emitter's presence is determined by a relatively low-power detection module before the images of the emitter and/or its surroundings are captured with a relatively high-power image capture module, and where the capture of images of the emitter can be synchronised with the flashes emitted by the emitter to increase the signal-noise ratio of the captured images.

WO 2014/078811 A1 lastly discloses synchronised infrared beacon/infrared detector system comprising an infrared beacon module configured to generate a time-varying encoded infrared signal, an infrared detector module configured to capture the encoded infrared signal generated by the infrared beacon module, a synchronizer configured to generate a synchronization signal that controls timing of the infrared beacon module and the infrared detector module, and a processor, in communication with the infrared detector module and configured to analyse the infrared signal captured by the infrared detector module. The infrared signal may be modulated at frequencies undetectable by human vision. The synchronizer signal may be produced independently of the capture of, and without input from, the infrared signal.

## Object and Summary of the Invention

The Applicant has experienced that those solutions in which the synchronization of digital image capture with the pulsed light emission is based on common synchronization signals are highly critical due to their sensitivity to the availability of inter-satellite relaying communications, via which the common synchronization signals are shared, or of a GNSS service that provides GNSS SIS that may be received and processed by both the target and detector satellites **2** and **4** to locally compute common synchronization signals.

The lack of availability of this telecommunications technology, a situation that may arise, for example, when one or both satellites are in an interplanetary orbit where no GNSS service is available, or are at a distance such that inter-satellite relaying communications are not practicable, the synchronization of digital image capture with pulsed light emission may not be guaranteed, so resulting in the identification of the target satellite being impracticable or, at best, more difficult or more imprecise.

The Applicant has further experienced that the solutions in which the synchronization of digital image capture with pulsed light emission is based on common synchronization signals are further critical due to the propagation delay of the light from the light source **1** to the imaging sensor **3**, which makes identification of the target satellite **2** more complicated.

The object of the present invention is hence to provide a technology that allows the aforementioned drawbacks to be overcome, in particular a technology that allows the digital image capture to auto-synchronize with pulsed light emission, without requiring a common synchronization signal to be shared or to be locally computed, and that, at the same time, is also insensitive to the light propagation delay.

This object is achieved by the present invention, which relates to an imaging-based target detection system, as claimed in the appended claims.

## Brief Description of the Drawings

Figure 1 shows a principle block diagram of the imaging-based detection technology exploitable by a detector satellite to detect a target satellite.

Figures 2, 3 and 4 show the time trends of physical quantities involved in the imaging-based detection technology shown in Figure 1.

## Detailed Description of Preferred Embodiments of the Invention

The following description is provided to enable an expert in the art to embody and use the invention. Various modifications to the embodiments will be obvious to an expert in the art, without departing from the scope of the claimed invention. Therefore, the present invention is not intended to be limited to the embodiments set forth, but is to be accorded the widest scope consistent with the principles and features described and claimed in the appended claims.

Unless defined otherwise, all technical and scientific terms used in this description have the normal meaning for an expert in the art to which the described embodiments belong. In the event of conflict, this description shall prevail, including the definitions. Furthermore, the examples are solely illustrative and should not be considered limitative. In particular, the block diagrams shown in the figures and described herein should not be considered as representing structural characteristics, i.e. structural limitations, but should be considered as representing functional characteristics, i.e. intrinsic properties of devices defined by the effects achieved or by the functional limitations and which can be implemented with different structures, in this manner protecting their functionality (possibility to operate).

In order to facilitate the understanding of the described embodiments, reference shall be made to certain embodiments and a specific language will be used to describe them. The purpose of the terminology used herein is to describe only particular embodiments, and should not be considered as limiting the scope of the present description.

The idea underlying the present invention is to pulsedly operate the light source **1** according to an operation pattern that must be known to the detector satellite **4**, and to operate the imaging sensor **3** synchronously with respect to the pulsed operation of the light source **1** based on the digital images captured by the imaging sensor **3.** In this way, the synchronization of the operation of the imaging sensor **3** with respect to the pulsed operation of the light source **1** results in no telecommunications technology being required to allow the target and detector satellites **2** and **4** to share a common synchronization signal or to locally compute the latter based on GNSS SIS, and is furthermore totally insensitive to the light propagation delay.

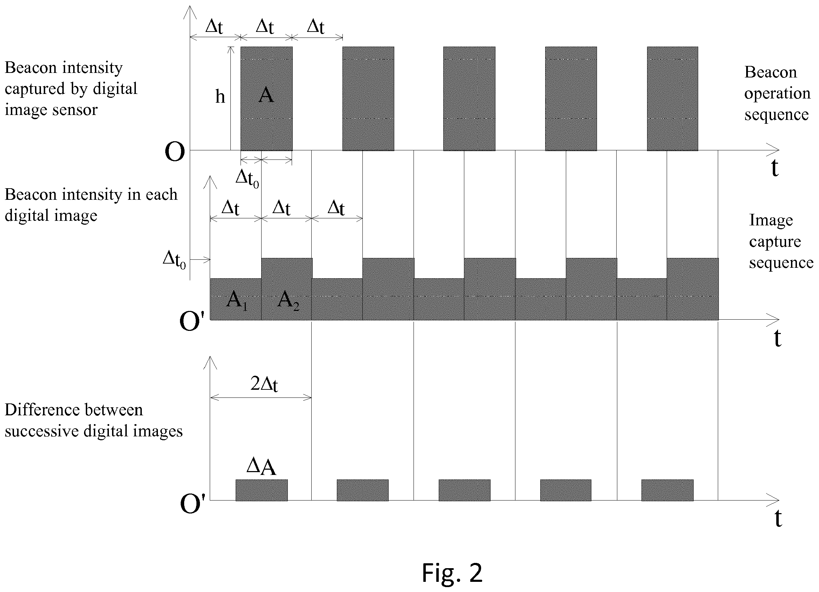

The synchronization of the operation of the imaging sensor **3** with respect to the pulsed operation of the light source **1** based on the digital images captured by the imaging sensor **3** will be described below with reference to Figures 2, 3 and 4, in which the time trends of the physical quantities involved are shown.

In particular, Figure 2 shows the time trends of the amount of light (number of photons) emitted by the light source **1** (top chart) and captured by the imaging sensor **3** in a digital image capture cycle, of the amount of light (number of photons) captured by the imaging sensor **3** in two successive digital images (middle chart) captured during a digital image capture cycle, and of the amount of light present in a difference image (bottom chart) computed as the difference between the two successive digital images, where the amount of light in a digital image computable based on the brightness of the pixels in the digital image.

Furthermore, in Figure 2, only the amount of light emitted by the light source **1** is taken into consideration, leaving out the light emitted by other light sources, such as the stars or straylights, as this represents a common background noise that is removed during computation of the difference image.

Furthermore, in Figure 2, the amount of light which is emitted by the light source **1** in the time period during which it is operated (is on), and which reaches the imaging sensor **3** is designated by A and is equal to $A = h \times \Delta t$, where h represents the number of photons emitted by the light source **1** per unit time and that reach the imaging sensor **3**, and $\Delta t$ represents the time interval during which the light source **1** is operated; the amounts of light emitted by the light source **1** and captured by the imaging sensor **3** in a digital image capture cycle during which a pair of successive digital images are captured are designated by $A_1$ and $A_2$, while their difference is designated by $\Delta A = A_2 - A_1$.

Furthermore, in Figure 2, an embodiment is shown in which the light source **1** is pulsedly operated according to an on-off operation pattern with a 50% duty-cycle, i.e. it is switched on for a switched-on time period $\Delta t$, during which it consequently emits a light ray that conveys a certain amount of light, and is then switched off for a switched-off time period $\Delta t$ equal to the switched-on time period.

The imaging sensor **3** is consequently operated synchronously with respect to the pulsed operation of the light source **1** so as to cause the imaging sensor **3** to carry out a digital image capture cycle during which a plurality of digital images are successively captured, and comprise a first digital image containing the representation of the light ray emitted by the light source **1**, and at least a second digital image not containing any representation of the light ray emitted by the light source **1**, wherein the first and the second digital images are captured with a capture time distance that, in the embodiment considered and shown in Figure 2, is equal to the switched-on time period $\Delta t$ of the light source **1** and which, hence, represents the operation time period of the imaging sensor **3** for carrying out a digital image capture cycle.

Furthermore, in the embodiment considered and shown in Figure 2, during a digital image capture cycle each of the digital images is captured using a capture time period lower than, or equal to, the switched-on time period $\Delta t$ of the light source **1**, depending on the time required to download the captured digital image from the imaging sensor **3** before starting the capture of the next digital image.

In other embodiments, the light source **1** may be pulsedly operated according to operation patterns other than the above-indicated one, for example on-off operation patterns with different duty-cycles, or pseudo-random on-off operation patterns, and the imaging sensor **3** is consequently operated with an operation period such as to allow at least two digital images to be successively captured in each digital image capture cycle, one of which contains the representation of the light ray emitted by the light source **1**, and in the second one of which does not contain any representation of the light ray emitted by the light source **1**.

The operation pattern of the light source **1** may be selectable, in the calibration phase of the imaging-based detection system, among a plurality of different available operation patterns, and information representative of the selected operation pattern, such as the type of the operation pattern, the switched-on time period $\Delta t$, and the switched-off time period $\Delta t$, or the total time period of the operation pattern (switch on and switch off) and the duty-cycle, is stored in the electronic processing unit **5**, as the knowledge of this information, as mentioned above, is required in order for the electronic processing unit **5** to synchronize the digital image capture with respect to the pulsed light emission.

Furthermore, in a different embodiment, more than two digital images could be successively captured during a digital image capture cycle, and based on which the electronic processing unit **5** may then compute, by implementing opportune image processing techniques, the digital image in which only the luminous spot representative of the light ray emitted by the light source **1** on the target satellite **2** and that has impinged on the imaging sensor **3** is shown.

Moreover, in the embodiment considered and shown in Figure 2, operation of the imaging sensor **3** is shown to be offset by a time offset $\Delta t_0 \neq 0$ with respect to the pulsed operation of the light source **1**, i.e., where the time origin O at which operation of the light source **1** starts does not coincide with the time origin O' at which operation of the imaging sensor **3** starts.

As it is possible to appreciate in Figure 2, the quantities A, $A_1$ and $A_2$ are always positive, as they represent the number of photons that impinge on the imaging sensor **3**, whereas the quantity $\Delta A$ can be positive, negative or null, depending on whether operation of the imaging sensor **3** is time offset or not with respect to the pulsed operation of the light source **1**, and its value and sign are indicative of whether operation of the imaging sensor **3** is time offset or not with respect to the pulsed operation of the light source **1**, and, in the case where it is, of the time offset between the operation of the imaging sensor **3** and the pulsed operation of the light source **1**.

In fact:

- if the time offset $\Delta t_0$ is null:
  $\Delta t_0 = 0$, $A_1 = 0$, $A_2 = A$, $\Delta A = A$,

- if the time offset $\Delta t_0$ is equal to half of the switched-on time period $\Delta t$ of the light source **1**:
  $\Delta t_0 = \Delta t/2$, $A_1 = A/2$, $A_2 = A/2$, $\Delta A = 0$,

- if the time offset $\Delta t_0$ is less than half of the switched-on time period $\Delta t$ of the light source **1**:
  $0 < \Delta t_0 < \Delta t/2$, $\Delta A > 0$,

- if the time offset $\Delta t_0$ is between half and the entire switched-on time period $\Delta t$ of the light source **1**:
  $\Delta t/2 < \Delta t_0 < \Delta t$, $\Delta A < 0$.

The knowledge of the time offset $\Delta t_0$ between the time origins O and O' therefore allows whether operation of the imaging sensor **3** is time offset or not with respect to the pulsed operation of the light source **1** to be determined and, in the case where it is not, operation of the imaging sensor **3** to be temporally aligned with respect to the pulsed operation of the light source **1**.

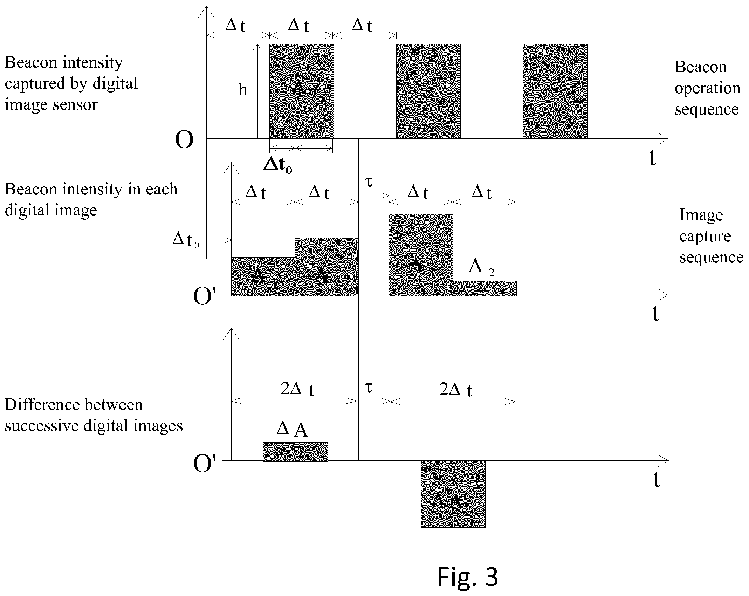

The time offset $\Delta t_0$ between the time origins O and O' is computable by the electronic processing unit **5** in the manner described below, with reference to Figure 3.

To this end, the electronic processing unit **5** is programmed to:

- cause the imaging sensor **3** to carry out a first digital image capture cycle during which a first pair of digital images are captured with a capture time distance that, in the embodiment considered, is equal to the operation time period $\Delta t$ of the light source **1**,
- compute, based on the first pair of digital images captured during the first digital image capture cycle, a first quantity $\Delta A$ indicative of the difference between the amounts of light that impinged on the imaging sensor **3** when the digital images of the first pair of digital images were captured,
- after a reoperation time period $\tau$, which is a function of the operation time period $\Delta t$ of the light source **1** and, in the embodiment considered, is equal to $\tau = \Delta t/2$, has elapsed from the end of the capture of the second image of the first pair of images, cause the imaging sensor **3** to carry out a second digital image capture cycle during which a second pair of digital images is captured with a capture time distance that, in the embodiment considered, is equal to the operation time period $\Delta t$ of the light source **1**,

- compute, based on the second pair of digital images captured during the second digital image capture cycle, a second quantity $\Delta A'$ indicative of the difference between the amounts of light that impinged on the imaging sensor **3** when the digital images of the second pair of digital images were captured, and
- compute the time offset $\Delta t_0$ between the time origins O and O', based on $\Delta t$, $\Delta A$ and $\Delta A'$, expediently according to the following formula:

$$\Delta t_0 = \begin{cases} 0 \ \text{if} \ \Delta A' = 0 \\ \dfrac{\Delta t}{2\left(1 - \dfrac{\Delta A}{\Delta A'}\right)} \ \text{if} \ \Delta A' \neq 0 \end{cases}$$

Once the time offset $\Delta t_0$ is known, the electronic processing unit **5** is programmed to synchronize operation of the imaging sensor **3** with respect to the pulsed operation of the light source **1** in the following manner:

- computing firstly an alignment time period $\tau'$, based on $\Delta t$, $\Delta A$, $\Delta A'$, and $\Delta(t_0)$, expediently according to the following formula:

$$\tau' = \begin{cases} \left(\dfrac{3}{2}\Delta t - \Delta t_0\right) + 2N\Delta t \ \text{if} \ (\Delta A \geq 0 \ and \ \Delta A' \leq 0) \ or \ (\Delta A \leq 0 \ and \ \Delta A' \leq 0) \\ \left(\dfrac{1}{2}\Delta t - \Delta t_0\right) + 2N\Delta t \ \text{if} \ (\Delta A \leq 0 \ and \ \Delta A' \geq 0) \ or \ (\Delta A \geq 0 \ and \ \Delta A' \geq 0) \end{cases}$$

- reoperating the imaging sensor **3** after the alignment time period $\tau'$ has elapsed from the end of the capture of the last digital image in the second digital image capture cycle.

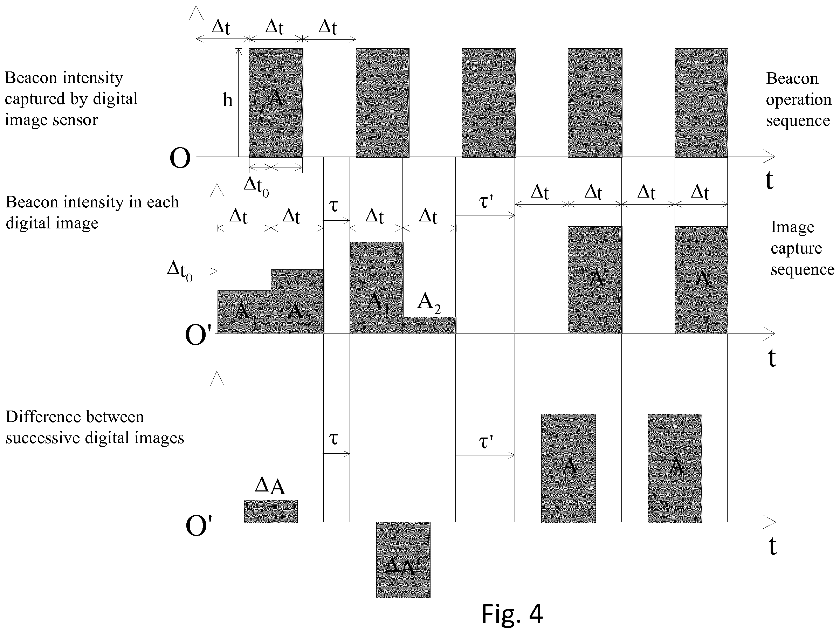

As shown in Figure 4, the alignment time period $\tau'$ causes realignment of the operation of the imaging sensor **3** with respect to the pulsed operation of the light source **1**, restoring the above-indicated condition of perfect alignment, namely:

$\Delta t_0 = 0$, $A_1 = 0$, $A_2 = A$, $\Delta A = A$.

Based on the foregoing, it is possible appreciate that the present invention allows the intended objects to be achieved, namely synchronizing the operation of the imaging sensor with respect to the pulsed operation of the light source, without requiring any common synchronization signal to be shared or locally computed, and also causing the auto-synchronization to be insensitive to the light propagation delay.

## Claims

1. An imaging-based target detection system comprising:

   ▪ an electromagnetic radiation emitting source (**1**) to be associated with a target (**2**) to be detected and pulsedly operable according to an operation pattern to emit electromagnetic radiation,
   ▪ an imaging sensor (**3**) sensitive to the electromagnetic radiation emitted by the electromagnetic radiation emitting source (**1**), and operable to capture digital images of the electromagnetic radiation emitting source (**1**), and
   ▪ an electronic processing unit (**5**) connected to the imaging sensor (**3**) and configured to:

      - store information representative of the operation pattern of the electromagnetic radiation emitting source (**1**),
      - operate the imaging sensor (**3**) synchronously with respect to the pulsed operation of the electromagnetic radiation emitting source (**1**) based on the stored information representative of the operation pattern of the electromagnetic radiation emitting source (**1**), so as to cause the imaging sensor (**3**) to carry out a digital image capture cycle during which a plurality of digital images are successively captured and comprise a first digital image captured when the imaging sensor (**3**) is impinged by electromagnetic radiation emitted by the electromagnetic radiation emitting source (**1**), and at least a second image captured when the imaging sensor (**3**) is not impinged by any electromagnetic radiation emitted by the electromagnetic radiation emitting source (**1**), and
- process the captured digital images to detect the target (**2**);

the imaging-based target detection system is **characterised in that** the electronic processing unit (**5**) is further configured to synchronise operation of the imaging sensor (**3**) with respect to the pulsed operation of the electromagnetic radiation emitting source (**1**) based on digital images captured by the imaging sensor (**3**).

2. The imaging-based target detection system of claim 1, wherein the electromagnetic radiation emitting source (**1**) is pulsedly operated to emit electromagnetic radiation for an emission time period ($\Delta t$); and wherein the electronic processing unit (**5**) is further configured to synchronise operation of the imaging sensor (**3**) with respect to the pulsed operation of the electromagnetic radiation emitting source (**1**) based on the digital images captured by the imaging sensor (**3**) by:

- causing the imaging sensor (**3**) to carry out a first digital image capture cycle during which a first digital image and at least a second digital image are captured,
- computing, based on the digital images captured during the first digital image capture cycle, a first quantity ($\Delta A$) indicative of a difference between the amounts of electromagnetic radiation that impinged on the imaging sensor (**3**) when the digital images were captured,
- after a reoperation time period ($\tau$), which is a function of the electromagnetic radiation emission time period ($\Delta t$), has elapsed from the capture of the last digital image during the first digital image capture cycle, causing the imaging sensor (**3**) to carry out a second digital image capture cycle during which a first digital image and at least a second digital image are captured again,
- computing, based on the digital images captured during the second digital image capture cycle, a second quantity ($\Delta A'$) indicative of a difference between the amounts of electromagnetic radiations that impinged on the imaging sensor (**3**) when the digital images were captured,
- computing a time offset ($\Delta t_0$) between the operation of the electromagnetic radiation emitting source (**1**) and the operation of the imaging sensor (**3**) based on the emission time period ($\Delta t$) and on the computed first and second quantities ($\Delta A$, $\Delta A'$), and
- synchronising the operation of the imaging sensor (**3**) with respect to the pulsed operation of the electromagnetic radiation emitting source (**1**) based on the emission time period ($\Delta t$), the computed first and second quantities ($\Delta A$, $\Delta A'$), and the computed time offset ($\Delta t_0$).

3. The imaging-based target detection system of claim 2, wherein the electronic processing unit (**5**) is further configured to synchronise the operation of the imaging sensor (**3**) with respect to the pulsed operation of the electromagnetic radiation emitting source (**1**) based on the emission time period ($\Delta t$), the computed first and second quantities ($\Delta A$, $\Delta A'$), and the computed time offset ($\Delta t_0$) by:

- computing an alignment time period ($\tau'$) based on the electromagnetic radiation emission time period ($\Delta t$), the computed first and second quantities ($\Delta A$, $\Delta A'$), and the computed time offset ($\Delta t_0$), and
- causing the imaging sensor (**3**) to carry out a further digital image capture cycle after the alignment time period ($\tau'$) has elapsed from the capture of the last digital image in the second digital image capture cycle.

4. The imaging-based target detection system of claim 2 or 3, wherein the reoperation time period ($\tau$) is equal to half the electromagnetic radiation emission time period ($\Delta t$).

5. The imaging-based detection system according of any one of the claims 2 to 4, wherein the electronic processing unit (**5**) is further configured to compute the time offset ($\Delta t_0$) between the operation of the electromagnetic radiation emitting source (**1**) and the operation of the imaging sensor (**3**) according to the following formula:

$$\Delta t_0 = \begin{cases} 0 \text{ if } \Delta A' = 0 \\ \dfrac{\Delta t}{2\left(1 - \dfrac{\Delta A}{\Delta A'}\right)} \text{ if } \Delta A' \neq 0 \end{cases}$$

where:

- $\Delta t_0$ is the time offset between the operation of the electromagnetic radiation emitting source (**1**) and the operation of the imaging sensor (**3**),
- $\Delta t$ is the electromagnetic radiation emission time period, and
- $\Delta A$ and $\Delta A'$ are the computed first and second quantities, respectively.

**6.** The imaging-based target detection system of claim 3, wherein the electronic processing unit (**5**) is further configured to compute the alignment time period ($\tau'$) according to the following formula:

$$\tau' = \begin{cases} \left(\frac{3}{2}\Delta t - \Delta t_0\right) + 2N\Delta t \ \text{if} \ (\Delta A \geq 0 \ and \ \Delta A' \leq 0) \ or \ (\Delta A \leq 0 \ and \ \Delta A' \leq 0) \\ \left(\frac{1}{2}\Delta t - \Delta t_0\right) + 2N\Delta t \ \text{if} \ (\Delta A \leq 0 \ and \ \Delta A' \geq 0) \ or \ (\Delta A \geq 0 \ and \ \Delta A' \geq 0) \end{cases}$$

where:

- $\tau'$ is the alignment time period,
- $\Delta t$ is the electromagnetic radiation emission time period,
- $\Delta t_0$ is the time offset between the operation of the electromagnetic radiation emitting source (1) and the operation of the imaging sensor (**3**), and
- $\Delta A$ and $\Delta A'$ are the computed first and second quantities, respectively.

**7.** The imaging-based detection system of any one of the preceding claims, wherein the information representative of the operation pattern of the electromagnetic radiation emitting source (**1**) is indicative of a an electromagnetic radiation emission time period ($\Delta t$) and of an electromagnetic radiation non-emission time period ($\Delta t$).

**8.** A software loadable in an electronic processing unit (**5**) of the imaging-based target detection system of any one of the preceding claims, and designed to cause, when executed, the electronic processing unit (**5**) to become configured as claimed in any one of the preceding claims.

**Patentansprüche**

**1.** Bildgebungsbasiertes Zielerkennungssystem aufweisend:

* eine elektromagnetische Strahlung emittierende Quelle (1), die mit einem zu detektierenden Ziel (2) zu assoziieren ist und gemäß einem Betriebsmuster gepulst betreibbar ist, um elektromagnetische Strahlung zu emittieren,
* einen Bildgebungssensor (3), der auf die elektromagnetische Strahlung, die von der elektromagnetische Strahlung emittierenden Quelle (1) emittiert wird, empfindlich ist und betreibbar ist, um Digitalbilder der elektromagnetische Strahlung emittierenden Quelle (1) zu erfassen, und
* eine elektronische Verarbeitungseinheit (5), die mit dem Bildgebungssensor (3) verbunden ist und konfiguriert ist, um:

- Information, die Betriebsmuster der elektromagnetische Strahlung emittierenden Quelle (1) repräsentiert, zu speichern,
- den Bildgebungssensor (3) synchron bezüglich des gepulsten Betriebs der elektromagnetische Strahlung emittierenden Quelle (1) auf Basis der gespeicherten Information, die die Betriebsmuster der elektromagnetische Strahlung emittierenden Quelle (1) repräsentiert, zu betreiben, um den Bildgebungssensor (3) zu veranlassen, einen Digitalbilderfassungszyklus auszuführen, während welchen mehrere Digitalbilder sukzessiv erfasst werden, die aufweisen: ein erstes Digitalbild, das erfasst wird, wenn der Bildgebungssensor (3) von elektromagnetischer Strahlung, die von der elektromagnetische Strahlung emittierenden Quelle (1) emittiert wird, getroffen wird, und mindestens ein zweites Digitalbild, das erfasst wird, wenn der Bildgebungssensor (3) von elektromagnetischer Strahlung, die von der elektromagnetische Strahlung emittierenden Quelle (1) emittiert wird, nicht getroffen wird, und
- die erfassten Digitalbilder zu verarbeiten, um das Ziel (2) zu erkennen;

wobei das bildgebungsbasierte Zielerkennungssystem **dadurch gekennzeichnet ist, dass** die elektronische Verarbeitungseinheit (5) ferner konfiguriert ist, einen Betrieb des Bildgebungssensors (3) bezüglich des gepulsten Betriebs der elektromagnetische Strahlung emittierenden Quelle (1) auf Basis von Digitalbildern, die von dem Bildgebungssensor (3) erfasst worden sind, zu synchronisieren.

2. Bildgebungsbasiertes Zielerkennungssystem nach Anspruch 1, wobei die elektromagnetische Strahlung emittierende Quelle (1) gepulst betrieben wird, um elektromagnetische Strahlung für eine Emissionszeitdauer ($\Delta t$) zu emittieren; und wobei die elektronische Verarbeitungseinheit (5) ferner konfiguriert ist, einen Betrieb des Bildgebungssensors (3) bezüglich des gepulsten Betriebs der elektromagnetische Strahlung emittierenden Quelle (1) auf Basis von Digitalbildern, die von dem Bildgebungssensor (3) erfasst worden sind, zu synchronisieren durch:

   - Veranlassen des Bildgebungssensors (3) einen ersten Digitalbilderfassungszyklus auszuführen, während welchen ein erstes Digitalbild und mindestens ein zweites Digitalbild erfasst werden,
   - Berechnen auf Basis der während des ersten Digitalbilderfassungszyklus erfassten Digitalbilder, einer ersten Quantität ($\Delta A$), die eine Differenz zwischen den elektromagnetischen Strahlungsmengen angibt, die auf dem Bildgebungssensor (3) auftrafen, als die Digitalbilder erfasst wurden,
   - nachdem eine Nachbetriebszeitdauer ($\tau$), die eine Funktion der Emissionszeitdauer ($\Delta t$) der elektromagnetischen Strahlung ist, seit der Erfassung des letzten Digitalbilds während des ersten Digitalbilderfassungszyklus verstrichen ist, Veranlassen des Bildgebungssensors (3), einen zweiten Digitalbilderfassungszyklus auszuführen, während welchen noch einmal ein erstes Digitalbild und mindestens ein zweites Digitalbild erfasst werden,
   - Berechnen auf Basis der während des zweiten Digitalbilderfassungszyklus erfassten Digitalbilder, einer zweiten Quantität ($\Delta A'$), die eine Differenz zwischen den elektromagnetischen Strahlungsmengen angibt, die auf dem Bildgebungssensor (3) auftrafen, als die Digitalbilder erfasst wurden,
   - Berechnen eines Zeitversatzes ($\Delta t_0$) zwischen dem Betrieb der elektromagnetische Strahlung emittierenden Quelle (1) und dem Betrieb des Bildgebungssensors (3) auf Basis der Emissionszeitdauer ($\Delta t$) und der berechneten ersten und zweiten Quantität ($\Delta A$, $\Delta A'$), und
   - Synchronisieren des Betriebs des Bildgebungssensors (3) bezüglich des gepulsten Betriebs der elektromagnetische Strahlung emittierenden Quelle (1) auf Basis der Emissionszeitdauer ($\Delta t$), der berechneten ersten und zweiten Quantität ($\Delta A$, $\Delta A'$) und des berechneten Zeitversatzes ($\Delta t_0$).

3. Bildgebungsbasiertes Zielerkennungssystem nach Anspruch 2, wobei die elektronische Verarbeitungseinheit (5) ferner konfiguriert ist, den Betrieb des Bildgebungssensors (3) bezüglich des gepulsten Betriebs der elektromagnetische Strahlung emittierenden Quelle (1) auf Basis der Emissionszeitdauer ($\Delta t$), der berechneten ersten und zweiten Quantität ($\Delta A$, $\Delta A'$) und des berechneten Zeitversatzes ($\Delta t_0$) zu synchronisieren durch:

   - Berechnen einer Ausrichtungszeitdauer ($\tau'$) auf Basis der Emissionszeitdauer ($\Delta t$) der elektromagnetischen Strahlung, der berechneten ersten und zweiten Quantität ($\Delta A$, $\Delta A'$) und des berechneten Zeitversatzes ($\Delta t_0$), und
   - Veranlassen des Bildgebungssensors (3), einen weiteren Digitalbilderfassungszyklus auszuführen, nachdem die Ausrichtungszeitdauer ($\tau'$) seit der Erfassung des letzten Digitalbilds in dem zweiten Digitalbilderfassungszyklus verstrichen ist.

4. Bildgebungsbasiertes Zielerkennungssystem nach Anspruch 2 oder 3, wobei die Nachbetriebszeitdauer ($\tau$) gleich der Hälfte der Emissionszeitdauer ($\Delta t$) der elektromagnetischen Strahlung ist.

5. Bildgebungsbasiertes Erkennungssystem nach einem der Ansprüche 2 bis 4, wobei die elektronische Verarbeitungseinheit (5) ferner konfiguriert ist, den Zeitversatz ($\Delta t_0$) zwischen dem Betrieb der elektromagnetische Strahlung emittierenden Quelle (1) und dem Betrieb des Bildgebungssensors (3) gemäß der folgenden Formel zu berechnen:

$$\Delta t_0 = \begin{cases} 0 \ \text{if} \ \Delta A' = 0 \\ \dfrac{\Delta t}{2\left(1 - \dfrac{\Delta A}{\Delta A'}\right)} \ \text{if} \ \Delta A' \neq 0 \end{cases}$$

wobei:

   - $\Delta t_0$ der Zeitversatz zwischen dem Betrieb der elektromagnetische Strahlung emittierenden Quelle (1) und dem Betrieb des Bildgebungssensors (3) ist,

- Δt die Emissionszeitdauer der elektromagnetischen Strahlung ist, und
- ΔA und ΔA' die berechnete erste bzw. zweite Quantität sind.

**6.** Bildgebungsbasiertes Zielerkennungssystem nach Anspruch 3, wobei die elektronische Verarbeitungseinheit (5) ferner konfiguriert ist, die Ausrichtungszeitdauer (τ') gemäß der folgenden Formel zu berechnen:

$$\tau' = \begin{cases} \left(\frac{3}{2}\Delta t - \Delta t_0\right) + 2N\Delta t & \text{if } (\Delta A \geq 0 \text{ and } \Delta A' \leq 0) \text{ or } (\Delta A \leq 0 \text{ and } \Delta A' \leq 0) \\ \left(\frac{1}{2}\Delta t - \Delta t_0\right) + 2N\Delta t & \text{if } (\Delta A \leq 0 \text{ and } \Delta A' \geq 0) \text{ or } (\Delta A \geq 0 \text{ and } \Delta A' \geq 0) \end{cases}$$

wobei:

- τ' die Ausrichtungszeitdauer ist,
- Δt die Emissionszeitdauer der elektromagnetischen Strahlung ist,
- $\Delta t_0$ der Zeitversatz zwischen dem Betrieb der elektromagnetische Strahlung emittierenden Quelle (1) und dem Betrieb des Bildgebungssensors (3) ist, und
- ΔA und ΔA' die berechnete erste bzw. zweite Quantität sind.

**7.** Bildgebungsbasiertes Erkennungssystem nach einem der vorstehenden Ansprüche, wobei die Information, die das Betriebsmuster der elektromagnetische Strahlung emittierenden Quelle (1) repräsentiert, eine Emissionszeitdauer (Δt) der elektromagnetischen Strahlung und eine Nichtemissionszeitdauer (Δt) der elektromagnetischen Strahlung angibt.

**8.** Software, die in eine elektronische Verarbeitungseinheit (5) des bildgebungsbasierten Zielerkennungssystems nach einem der vorstehenden Ansprüche geladen werden kann und entworfen ist, um, wenn ausgeführt, zu bewirken, dass die elektronische Verarbeitungseinheit (5), wie in einem der vorstehenden Ansprüche beansprucht, konfiguriert wird.

**Revendications**

**1.** Système de détection de cible basé sur imagerie, comprenant :

- une source d'émission de rayonnement électromagnétique (1) qui est destinée à être associée à une cible (2) destinée à être détectée et qui peut être rendue opérationnelle par impulsions conformément à un motif opératoire de manière à ce qu'elle émette un rayonnement électromagnétique ;
- un capteur d'imagerie (3) qui est sensible au rayonnement électromagnétique émis par la source d'émission de rayonnement électromagnétique (1) et qui peut être rendu opérationnel pour capturer des images numériques de la source d'émission de rayonnement électromagnétique (1) ; et
- une unité de traitement électronique (5) qui est connectée au capteur d'imagerie (3) et qui est configurée pour:

  - le stockage d'une information représentative du motif opératoire de la source d'émission de rayonnement électromagnétique (1) ;
  - le fonctionnement du capteur d'imagerie (3) de façon synchrone par rapport au fonctionnement par impulsions de la source d'émission de rayonnement électromagnétique (1) sur la base de l'information stockée qui est représentative du motif opératoire de la source d'émission de rayonnement électromagnétique (1), de manière à forcer le capteur d'imagerie (3) à mettre en œuvre un cycle de capture d'images numériques pendant lequel une pluralité d'images numériques sont successivement capturées et comprennent une première image numérique capturée lorsque le capteur d'imagerie (3) reçoit en incidence le rayonnement électromagnétique émis par la source d'émission de rayonnement électromagnétique (1) et au moins une seconde image capturée lorsque le capteur d'imagerie (3) ne reçoit pas en incidence un quelconque rayonnement électromagnétique émis par la source d'émission de rayonnement électromagnétique (1) ; et
  - le traitement des images numériques capturées de manière à détecter la cible (2) ;

le système de détection de cible basé sur imagerie est **caractérisé en ce que** l'unité de traitement électronique (5) est en outre configurée pour synchroniser le fonctionnement du capteur d'imagerie (3) par rapport au fonctionnement par impulsions de la source d'émission de rayonnement électromagnétique (1) sur la base d'images numériques capturées par le capteur d'imagerie (3).

2. Système de détection de cible basé sur imagerie selon la revendication 1, dans lequel la source d'émission de rayonnement électromagnétique (1) est rendue opérationnelle par impulsions de manière à émettre un rayonnement électromagnétique pendant une période temporelle d'émission ($\Delta t$) ; et dans lequel l'unité de traitement électronique (5) est en outre configurée pour synchroniser le fonctionnement du capteur d'imagerie (3) par rapport au fonctionnement par impulsions de la source d'émission de rayonnement électromagnétique (1) sur la base des images numériques capturées par le capteur d'imagerie (3) en :

- amenant le capteur d'imagerie (3) à mettre en œuvre un premier cycle de capture d'images numériques pendant lequel une première image numérique et au moins une seconde image numérique sont capturées,
- calculant, sur la base des images numériques capturées pendant le premier cycle de capture d'images numériques, une première quantité ($\Delta A$) qui est indicative d'une différence entre les valeurs de rayonnements électromagnétiques qui sont arrivés en incidence sur le capteur d'imagerie (3) lorsque les images numériques ont été capturées,
- après qu'une période temporelle de fonctionnement renouvelé ($\tau$), qui est une fonction de la période temporelle d'émission de rayonnement électromagnétique ($\Delta t$), s'est écoulée depuis la capture de la dernière image numérique pendant le premier cycle de capture d'images numériques, en amenant le capteur d'imagerie (3) à mettre en œuvre un second cycle de capture d'images numériques pendant lequel une première image numérique et au moins une seconde image numérique sont capturées à nouveau,
- calculant, sur la base des images numériques capturées pendant le second cycle de capture d'images numériques, une seconde quantité ($\Delta A'$) qui est indicative d'une différence entre les valeurs de rayonnements électromagnétiques qui sont arrivés en incidence sur le capteur d'imagerie (3) lorsque les images numériques ont été capturées,
- calculant un décalage temporel ($\Delta t_0$) entre le fonctionnement de la source d'émission de rayonnement électromagnétique (1) et le fonctionnement du capteur d'imagerie (3) sur la base de la période temporelle d'émission ($\Delta t$) et des première et seconde quantités calculées ($\Delta A$, $\Delta A'$), et
- synchronisant le fonctionnement du capteur d'imagerie (3) par rapport au fonctionnement par impulsions de la source d'émission de rayonnement électromagnétique (1) sur la base de la période temporelle d'émission ($\Delta t$), des première et seconde quantités calculées ($\Delta A$, $\Delta A'$) et du décalage temporel calculé ($\Delta t_0$).

3. Système de détection de cible basé sur imagerie selon la revendication 2, dans lequel l'unité de traitement électronique (5) est en outre configurée pour synchroniser le fonctionnement du capteur d'imagerie (3) par rapport au fonctionnement par impulsions de la source d'émission de rayonnement électromagnétique (1) sur la base de la période temporelle d'émission ($\Delta t$), des première et seconde quantités calculées ($\Delta A$, L1A') et du décalage temporel calculé ($\Delta t_0$) en :

- calculant une période temporelle d'alignement ($\tau'$) sur la base de la période temporelle d'émission de rayonnement électromagnétique ($\Delta t$), des première et seconde quantités calculées ($\Delta A$, L1A') et du décalage temporel calculé ($\Delta t_0$), et
- amenant le capteur d'imagerie (3) à mettre en œuvre un autre cycle de capture d'images numériques après que la période temporelle d'alignement ($\tau'$) s'est écoulée depuis la capture de la dernière image numérique dans le second cycle de capture d'images numériques.

4. Système de détection de cible basé sur imagerie selon la revendication 2 ou 3, dans lequel la période temporelle de fonctionnement renouvelé ($\tau$) est égale à la moitié de la période temporelle d'émission de rayonnement électromagnétique ($\Delta t$).

5. Système de détection de cible basé sur imagerie selon l'une quelconque des revendications 2 à 4, dans lequel l'unité de traitement électronique (5) est en outre configurée pour calculer le décalage temporel ($\Delta t_0$) entre le fonctionnement de la source d'émission de rayonnement électromagnétique (1) et le fonctionnement du capteur d'imagerie (3) conformément à la formule suivante :

$$\Delta t_0 = \begin{cases} 0 \; si \; \Delta A' = 0 \\ \dfrac{\Delta t}{2 \left(1 - \dfrac{\Delta A}{\Delta A'}\right)} \; si \; \Delta A' \neq 0 \end{cases}$$

dans laquelle :

- $\Delta t_0$ est le décalage temporel entre le fonctionnement de la source d'émission de rayonnement électromagnétique (1) et le fonctionnement du capteur d'imagerie (3) ;
- $\Delta t$ est la période temporelle d'émission de rayonnement électromagnétique ; et
- $\Delta A$ et $\Delta A'$ sont respectivement les première et seconde quantités calculées.

6. Système de détection de cible basé sur imagerie selon la revendication 3, dans lequel l'unité de traitement électronique (5) est en outre configurée pour calculer la période temporelle d'alignement ($\tau'$) conformément à la formule suivante :

$$\tau' = \begin{cases} \left(\dfrac{3}{2}\Delta t - \Delta t_0\right) + 2N\Delta t \; si \; (\Delta A \geq 0 \; et \; \Delta A' \leq 0) \; ou \; (\Delta A \leq 0 \; et \; \Delta A' \leq 0) \\ \left(\dfrac{1}{2}\Delta t - \Delta t_0\right) + 2N\Delta t \; si \; (\Delta A \leq 0 \; et \; \Delta A' \geq 0) \; ou \; (\Delta A \geq 0 \; et \; \Delta A' \geq 0) \end{cases}$$

dans laquelle :

- $\tau'$ est la période temporelle d'alignement ;
- $\Delta t$ est la période temporelle d'émission de rayonnement électromagnétique ;
- $\Delta t_0$ est le décalage temporel entre le fonctionnement de la source d'émission de rayonnement électromagnétique (1) et le fonctionnement du capteur d'imagerie (3) ; et
- $\Delta A$ et $\Delta A'$ sont respectivement les première et seconde quantités calculées.

7. Système de détection de cible basé sur imagerie selon l'une quelconque des revendications précédentes, dans lequel l'information représentative du motif opératoire de la source d'émission de rayonnement électromagnétique (1) est indicative d'une période temporelle d'émission de rayonnement électromagnétique ($\Delta t$) et d'une période temporelle de non émission de rayonnement électromagnétique ($\Delta t$).

8. Logiciel pouvant être chargé à l'intérieur d'une unité de traitement électronique (5) du système de détection de cible basé sur imagerie selon l'une quelconque des revendications précédentes et conçu pour amener, lorsqu'il est exécuté, l'unité de traitement électronique (5) à devenir configurée tel que revendiqué selon l'une quelconque des revendications précédentes.

Fig. 1

Fig. 2

Fig. 3

Fig. 4

**REFERENCES CITED IN THE DESCRIPTION**

**Patent documents cited in the description**

- IT 102018000002654
- EP 1989681 A
- US 2009324015 A1
- WO 2014078811 A1